# EUROPÄISCHE PATENTSCHRIFT

(11) **EP 2 806 616 B1**
(45) Veröffentlichungstag und Bekanntmachung des Hinweises auf die Patenterteilung: **14.11.2018**
(21) Anmeldenummer: 14001294.9
(22) Anmeldetag: 09.04.2014
(51) Int. Cl.: H04M 1/04, H04B 1/3883

(54) **Steckermodul für Mobiltelefonhalter**
Connector module for a mobile phone holder
Module enfichable pour un support de téléphone portable

(30) Priorität: 21.05.2013 DE 202013004632 U
(43) Veröffentlichungstag der Anmeldung: 26.11.2014
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- WO-A2-2011/047984
- US-A1- 2006 013 411
- US-A1- 2010 051 764

## Beschreibung

Die Erfindung betrifft einen Steckermodul für Mobiltelefonhalter, und zwar insbesondere einen Universal-Steckermodul zur oder in Verbindung mit einem Universal-Mobiltelefonhalter.
Die Ausstattung von Mobiltelefonhaltern mit einem integrierten Ladestecker zum Aufladen des Mobiltelefons während seines Verweilens im Halter ist an sich bekannt. Weil aber Anordnung und Ausbildung der Ladebuchsen an den verschiedenen, auf dem Markt befindlichen Mobiltelefonen und dementsprechend die dazu erforderlichen Ladestecker verschieden sind, gibt es Mobiltelefonhalter mit integriertem Ladestecker nur vereinzelt und nur bei jeweils für das betreffende Mobiltelefon besonders angepaßten Haltern. Diese können für kein anderes Mobiltelefon verwendet werden.
Bei Universal-Mobiltelefonhaltern, wie sie insbesondere als Klemmbackenhalter bekannt sind, erfolgt das Aufladen der Mobiltelefone dagegen üblicherweise mit einem daran angesteckten Kabel, das in eine Stromsteckdose im Fahrzeug eingesteckt wird. Das erfordert freilich das Einstecken des Ladekabels in das Mobiltelefon bzw. das Ausstecken des Ladekabels, wenn das Mobiltelefon in den Halter eingesetzt oder aus diesem herausgenommen.

Dokument WO2011/047984 offenbart eine Ladestation für ein elektronisches Gerät. Die Ladestation weist auf einer Grundplatte einen Halter für den Gerätestecker eines Ladekabels auf und in einem einstellbaren Abstand dazu eine Pultplatte als Rückenlehne für das elektronische Gerät.

Aufgabe der Erfindung ist es daher, einen Universal-Steckermodul zu schaffen, der zusammen mit einem Universal-Mobiltelefonhalter verwendbar ist und ein Einstecken und Ausstecken des Mobiltelefons in einen bzw. aus einem Ladestecker (oder einem Datenkabelstecker) beim Einlegen bzw. Herausnehmen des Mobiltelefons in den bzw. aus dem Halter erlaubt.
Diese Aufgabe wird gemäß der Erfindung durch die im Anspruch 1 angegebene Anordnung gelöst.

Vorteilhafte Ausgestaltungen und Weiterbildungen der Erfindung sind Gegenstand der Unteransprüche.

Der erfindungsgemäße Steckermodul kann lösbar mit dem Mobiltelefonhalter kuppelbar sein. Er kann auch fest, beispielsweise mittels Schrauben, mit dem Telefonhalter verbindbar sein. Ebenso kann er in dem Telefonhalter integriert sein.

Eine lösbare Verbindung kann beispielweise durch Vorsehen von Rastzapfen erfolgen, die in entsprechende Rastlöcher des Telefonhalters eingreifen.

Eine bevorzugte Ausführungsform der Erfindung geht von Universal-Mobiltelefonhaltern aus, wie sie in der EP-1 582 409 D1 des Anmelders beschrieben sind, und die an dem in der Gebrauchslage unteren Randbereich des Telefonhalters eine Führungsnut aufweisen, in welcher Fußteile von Stützfingern verschiebbar geführt sind, auf denen das Mobiltelefon mit seinem Unterkantenbereich aufsitzt. Die erfindungsgemäße Steckermodul ist in diesem Fall mit einem entsprechenden Formschlußprofil ausgebildet, das statt der Haltefinger in eine solche Führungsnut einführbar ist. Damit kann der erfindungsgemäße Steckermodul die Führungsfinger ersetzen, die dann nicht mehr gebraucht werden, weil der Steckermodul ihre Aufgabe übernimmt, und der erfindungsgemäße Steckermodul kann bei allen schon vorhandenen derartigen Universal-Telefonhaltern nachgerüstet werden.

Der erfindungsgemäße Steckermodul besteht aus einem Rahmen, der bei an den Mobiltelefonhalter ankuppelbarer Ausführungsform mit den Kupplungsmitteln versehen ist, weiter aus einem Steckerträgerblock, der vorzugsweise an dem Rahmen um eine gewisse Verstelldistanz in Vorwärts-Rückwärts-Richtung verstellbar ist, und einem austauschbar in den Steckerträgerblock eingesetzten Steckerhalteeinsatz. Der Steckerhalteeinsatz ist dabei herausnehmbar in eine vertikale Öffnung des Trägerblocks eingesetzt. Dieser Steckerhalteeinsatz ist für die Aufnahme eines bestimmten Lade- oder sonstigen Steckers ausgebildet, der einen bestimmten Mobiltelefon oder bestimmten Mobiltelefonen zugeordnet ist, wobei es sich um einen Mikro-USB-Stecker oder einen anderen Stecker handeln kann. Dieser Halteeinsatz ist ein einfaches und billiges Kunsttstoffteil, so dass einem erfindungsgemäßen Steckermodul eine Mehrzahl verschiedener solcher Halteeinsätze beigegeben werden kann, um mindestens alle gängigen Mikro-USB-Stecker abzudecken, und aus welchen der Benutzer dann den für den jeweiligen Ladestecker oder sonstigen Stecker passenden aussuchen und in den Steckermodul einsetzen kann.

Der Halteeinsatz nimmt also beispielsweise den Ladestecker eines Ladekabels auf. Das Fixieren des Ladesteckers mit dem Halteeinsatz im Trägerblock kann zuverlässig mittels eines rückseitig im Trägerblock sitzenden Spannschraube mit handbetätigbarem Drehknopf oder Knebel erfolgen, alternativ wäre auch eine permanent klemmende federnde Klemmvorrichtung denkbar. Eine Spannschraube wird allerdings bevorzugt, da hierdurch eine Spannkraft nach Bedarf ausgeübt und gelöst werden kann, um den Halteeinsatz mit dem Stecker bei Bedarf ohne Beschädigung oder Verschleiß herausnehmen und einsetzen zu können. Auch ist dann nicht die Gefahr eines Erlahmens einer Spannfeder gegeben.

Die Erfindung wird nachstehend anhand eines Ausführungsbeispiels mit Bezug auf die anliegenden Zeichnungen mehr im einzelnen beschrieben, in denen zeigt:
- Fig. 1: eine perspektivische Ansicht eines erfindungsgemäßen Steckermoduls schräg von vorn,
- Fig. 2: eine perspektivische Ansicht des Steckermoduls schräg von hinten,
- Fig. 3: eine Frontansicht des Steckermoduls,
- Fig. 4: einen Schnitt längs der Schnittlinie A-A in Fig.3,
- Fig. 5: einen Schnitt längs der Schnittlinie B-B in Fig.3,
- Fig. 6: eine Draufsicht des Steckermoduls nach der Erfindung,
- Fig. 7: eine perspektivische Ansicht eines Mobiltelefonhalters mit angebautem Steckermodul in perspektivischer Ansicht schräg von vorn und
- Fig. 8: in perspektivischer Ansicht einen Mobiltelefonhalter mit angebautem Steckermodul in perspektivischer Ansicht schräg von hinten.

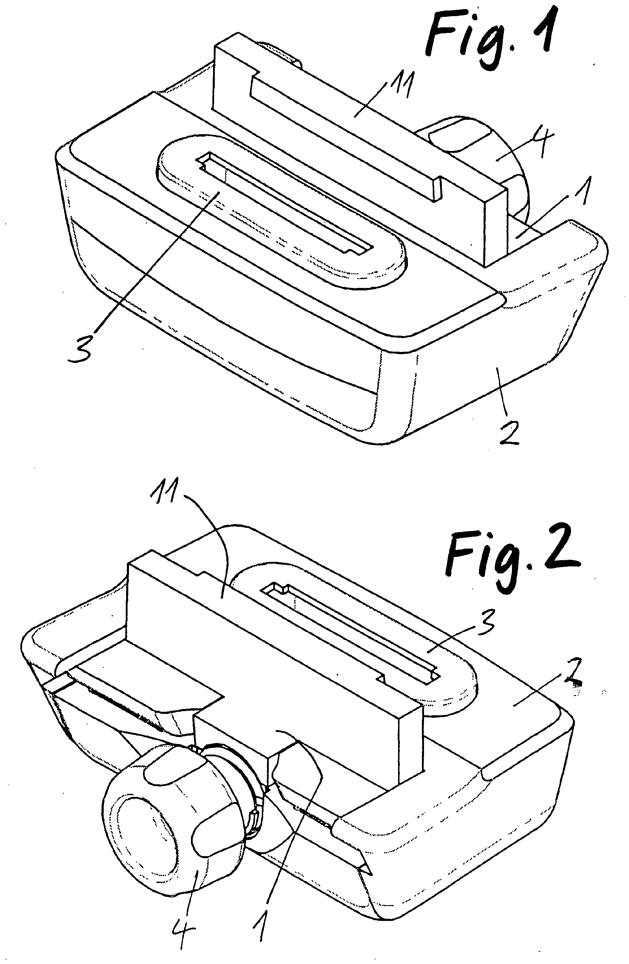

Die Fig. 1 und 2 zeigen den erfindungsgemäßen Steckermodul schräg von vorn bzw. schräg von hinten in perspektivischer Ansicht. Er besteht aus einem Rahmen 1, an welchem ein Kupplungselement 11 angeformt ist. Das Kupplungselement hat ein kopfstehendes L-Profil und dient dazu, in eine an einem bekannten Universal-Mobiltelefonhalter gebildete Führungsnut eingeschoben zu werden, die sich am unteren und gegebenenfalls oberen Randbereich des Mobiltelefonhalters befindet und normalerweise zur Aufnahme von Fußteilen von Stützfingern dient, die dort seitlich verschiebbar eingesetzt sind, um den Unterkantenbereich eines in den Mobiltelefonhalter eingelegten Mobiltelefons abzustützen.

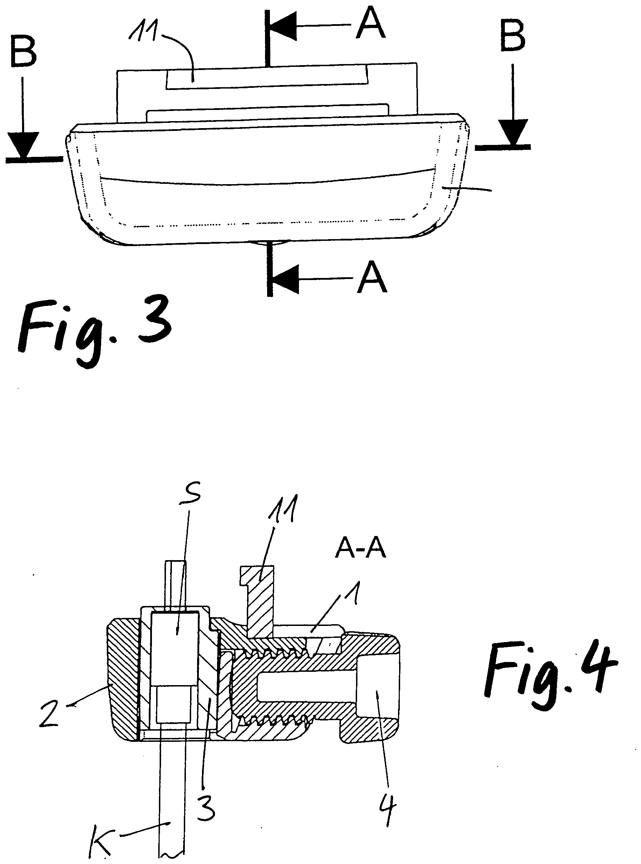

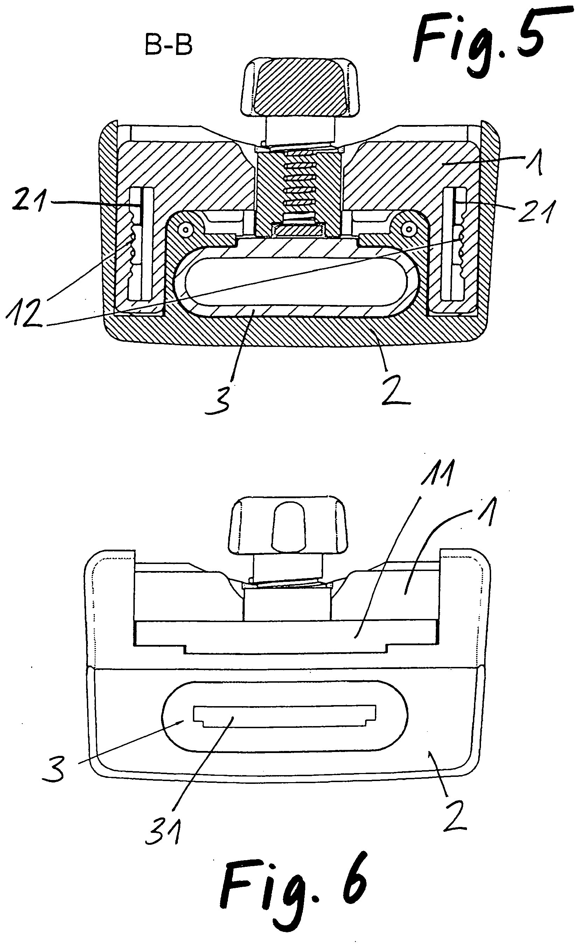

Wie weiter aus den Fig. 4 und 5 ersichtlich ist, die Schnitte entsprechend den Schnittlinien A-A bzw. B-B in der Frontansicht nach Fig. 3 zeigen, ist auf dem Rahmen 1 ein Steckerträgerblock 2 in Vorwärts-Rückwärts-Richtung verschiebbar an dem Rahmen 1 geführt, wobei dieser Steckerträgerblock 2 zugleich das von außen sichtbare Gehäuse bildet.

In Fig. 5 ist ein Ratschenmechanismus 12 sichtbar, der am Rahmen 1 gebildete Rastzahnleisten und mit dem Steckerträgerblock 2 verbundene Blattfedern 21 mit Gegenelementen aufweist, die mit den Rastzahnleisten zusammenwirken. Dadurch ist der Steckerträgerblock 2 in kleinen Rastschritten in Vorwärts-Rückwärts-Richtung am Rahmen verschiebbar.

In den Steckerträgerblock 2 ist ein Steckerhalteeinsatz 3 eingesetzt. Dieser ist beim Ausführungsbeispiel von unten eingesetzt, wie aus Fig. 4 erkennbar ist. Er könnte aber auch von unten eingesetzt sein. Das ist für die Erfindung nicht wesentlich

Der Steckerhalteeinsatz 3 hat eine Öffnung 31 zur Aufnahme beispielsweise eines Ladesteckers. Diese Aufnahmeöffnung 31 ist speziell an einen bestimmten Ladestecker für ein bestimmtes Mobiltelefon oder eine bestimmte Gruppe von Mobiltelefonen eines Herstellers angepaßt, um diesen Ladestecker genau aufnehmen zu können.

Da der Steckerhalteeinsatz 3 nur ein kleines billiges Kunststoffteil ist, kann dies ohne nennenswerten Aufwand in mehreren Versionen mit unterschiedlichen Aufnahmeöffnungen 31 entsprechend der Formen der gängigen Ladestecker oder Mikro-USB-Stecker hergestellt und jeweils als Sortiment einem Steckermodul beigegeben werden, so daß der Benutzer für jeden marktgängigen Stecker den passenden Einsatz frei verfügbar hat und einfach einstecken kann.

Da der Ladestecker am Ladekabel natürlich einer Fixierung im Steckermodul bedarf, die vorzugsweise lösbar ist, um den Ladestecker ohne Kraftaufwand und ohne Beschädigungsgefahr in den Steckerhalteeinsatz 3 einsetzen oder aus diesem herausnehmen zu können, ist eine Spannschraube 4 vorgesehen, die im Steckerträgerblock 2 eingeschraubt ist und gegen die Rückseite des aufgrund der materialbedingten Eigenelastizität des Steckerhalteeinsatzes 3 drückt und beim Anziehen diesen etwas elastisch quetscht, wodurch auch ein darin eingesetzter Ladestecker festgespannt wird.

In dem Schnitt A-A nach Fig. 4 ist ein in den Steckerhalteeinsatz 3 eingesetzter Ladestecker S am Ende eines Ladekabels K dargestellt. Dort sieht man auch, daß die Spannschraube 4 nicht unmittelbar gegen den Halteeinsatz 3 drückt, sondern mittelbar über eine im Trägerblock enthaltene Lasche.

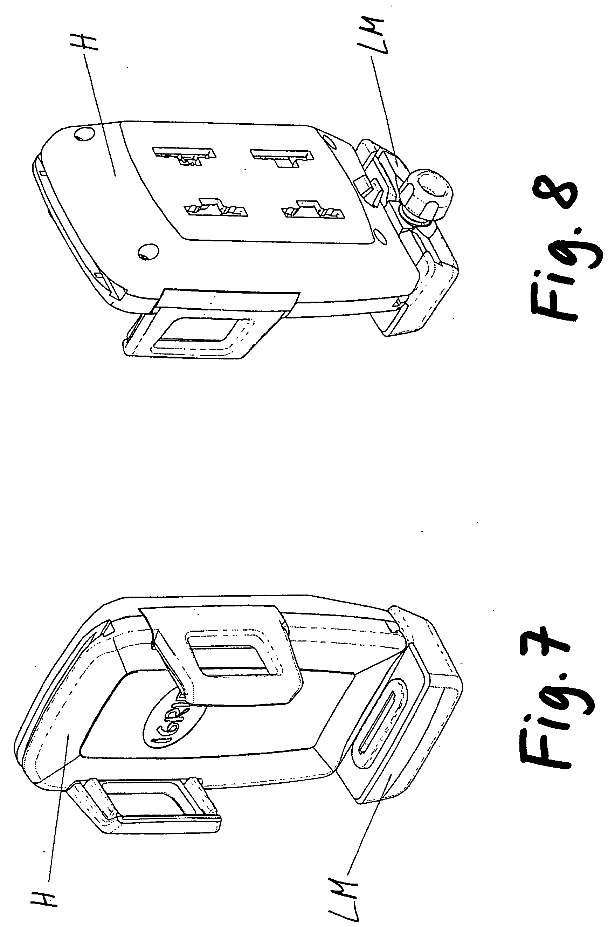

Schließlich zeigen die Fig. 7 und 8 in jeweils perspektivischer Ansicht schräg von vorn bzw. schräg von hinten zur Veranschaulichung den erfindungsgemäßen Steckermodul LM angebaut an einen Universal-Mobiltelefonhalter H.

Bei dem dargestellten Ausführungsbeispiel ist der Steckerträgerblock 2 in Vorwärts-Rückwärts-Richtung verschiebbar am oder im Rahmen 1 geführt, um unterschiedlichen Positionierungen der Ladebuchse im Unterkantenbereich des Mobiltelefons in dieser Vorwärts-Rückwärts-Richtung Rechnung zu tragen.

Die Konstruktion kann vereinfacht werden, nämlich durch Weglassung der Vorwärts-Rückwärts-Verstellbarkeit des Steckerträgerblocks 2 im Rahmen 1 und durch starre Anordnung desselben am Rahmen, wenn der Steckerhalteeinsatz 3 so modifiziert wird, dass er auch dem möglichen Schwankungsbereich der Positionierung beispielsweise der Ladebuchse am Mobiltelefon in Vorwärts-Rückwärts-Richtung Rechnung trägt. Dies ist insbesondere im Hinblick darauf sinnvoll, dass für den Steckermodul ohnehin mehrere Steckerhalteeinsätze vorgesehen sein sollen, die jeweils an einen der marktgängigen Ladestecker angepasst sind, und aus denen der Benutzer dann den passenden auswählt. Dazu sind die Steckerhalteeinsätze alle mit einer Tiefe in Vorwärts-Rückwärts-Richtung ausgebildet, die den ganzen möglichen Schwankungsbereich der erforderlichen Ladesteckerpositionen in Vorwärts-Rückwärts-Richtung abdeckt, wobei dann die Aufnahmeöffnung für den Ladestecker in Vorwärts-Rückwärts-Richtung entsprechend dem jeweiligen Modell passend im Steckerhalteeinsatz vorgesehen ist. Es muss dann nur dafür gesorgt werden, dass der Steckerhalteeinsatz nicht falsch herum, nämlich durch Vertauschung von Vorder- und Rückseite in den Rahmen eingesetzt werden kann, was aber durch übliche mechanische Kodiermittel sichergestellt werden kann, die ein falsches Einstecken verhindern.

Alles, was in der vorstehenden Beschreibung des Ausführungsbeispiels in Bezug auf Ladestecker gesagt ist, gilt gleichermaßen für Stecker von Datenkabeln.

## Patentansprüche

1. Universal-Steckermodul zur Verwendung mit einem Universal-Mobiltelefonhalter, bestehend aus einem mit dem Mobiltelefonhalter verbundenen oder verbindbaren Rahmen (1), einem Steckerträgerblock (2) an dem Rahmen (1), und einem auswechselbar in den Steckerträgerblock (2) einsetzbaren Steckerhalteeinsatz (3), der eine Aufnahmeöffnung (31) zum Einsetzen eines Ladesteckers oder Datenkabelsteckers aufweist, und der mittels eines Spannelements (4) zusammen mit dem eingesetzten Stecker im Steckerträgerblock (2) in seiner Position fixierbar ist.

2. Steckermodul nach Anspruch 1, wobei der Rahmen (1) mit mindestens einem Kupplungsmittel (11) zum Kuppeln mit einem unteren Randbereich des Mobiltelefonhalters ausgebildet ist.

3. Steckermodul nach Anspruch 2, wobei das Kupplungsmittel (11) eine Profilleiste ist, die in eine normalerweise zur Aufnahme von Stützfingern dienende Führungsnut im unteren Randbereich des Mobiltelefonhalters einführbar ist.

4. Steckermodul nach einem der Ansprüche 1 bis 3, wobei das Spannelement (4) eine Klemmschraube ist, die den Steckerhalteeinsatz (3) samt einem darin eingesetzten Stecker (S) im Steckerträgerblock (2) festspannt und fixiert.

5. Steckermodul nach einem der Ansprüche 1 bis 4, wobei der Steckerträgerblock (2) am Rahmen in Vorwärts-Rückwärts-Richtung um eine gewisse Verstelldistanz verstellbar angeordnet ist.

6. Steckermodul nach Anspruch 5, wobei der Steckerträgerblock (2) am Rahmen (1) mittels eines Ratschenmechanismus (12) stufig rastbar in Vorwärts-Rückwärts-Richtung innerhalb der gewissen Verstelldistanz verstellbar ist.

7. Steckermodul nach einem der Ansprüche 1 bis 4, wobei der Steckerträgerblock (2) feststehend am Rahmen (1) angeordnet ist, und der Steckerhalteeinsatz (3) in Vorwärts-Rückwärts-Richtung eine ausreichende Tiefe hat, um die Aufnahmeöffnung (31) zum Einsetzen eines Steckers in der in Vorwärts-Rückwärts-Richtung richtigen, dem jeweiligen Stecker und dem zugehörigen Mobiltelefonmodell entsprechenden Position anordnen zu können.

8. Steckermodul nach einem der Ansprüche 1 bis 7, wobei mehrere Steckerhalteeinsätze (3) mit jeweils unterschiedlichen Aufnahmeöffnungen (31) vorgesehen sind, die an jeweils verschiedene marktgängige Stecker angepasst sind.

## Claims

1. Universal connector module for use with a universal mobile telephone holder, consisting of a frame (1) connected or connectable to the mobile telephone holder, a connector support block (2) on the frame (1), and a connector support insert (3) interchangeably insertable into the connector support block (2), the insert having a reception opening (31) for inserting a charging connector or a data cable connector, and being fixable, together with the inserted connector, in its position in the connector support block (2) by means of a tensioning element (4).

2. Connector module according to claim 1, wherein the frame (1) is configured with at least one coupling means (11) for coupling with the lower edge area of the mobile telephone holder.

3. Connector module according to claim 2, wherein the coupling means (11) is a profile bar that is insertable into a leading groove in the lower edge area of the mobile telephone holder that normally serves for the reception of support fingers.

4. Connector module according to any one of claims 1 to 3, wherein the tensioning element (4) is a clamping screw that tensions and fixes the connector support insert (3), together with a connector (S) inserted thereto, in the connector support block (2).

5. Connector module according to any one of claims 1 to 4, wherein the connector support block (2) is arranged on the frame so as to be adjustable by a certain adjusting distance in the forward-rearward direction.

6. Connector module according to claim 5, wherein the connector support block (2) can be latchingly adjusted on the frame (1), stepwise within the certain adjusting distance in the forward-rearward direction, by means of a ratchet mechanism (12).

7. Connector module according to any one of claims 1 to 4, wherein the connector support block (2) is stationary on the frame (1) and the connector support insert (3) has a sufficient depth in the forward-rearward direction so that the reception opening (31) can be arranged in the correct position for insertion of a connector in the forward-rearward direction corresponding to the respective connector and the associated type of mobile telephone.

8. Connector module according to any one of claims 1 to 7, wherein several connector support inserts (3) are provided, each insert having different reception openings (31) adapted for use with respectively different connectors commonly available on the market.

## Revendications

1. Module de connecteur universel à utiliser avec un support universel de téléphone mobile, constitué d'un cadre (1) relié ou pouvant être relié au support de téléphone mobile, d'un bloc de support de connecteur (2) sur le cadre (1) et d'un insert de support de connecteur (3) qui peut être inséré de manière échangeable dans le bloc de support de connecteur (2), l'insert présentant une ouverture de réception (31) pour insérer un connecteur de chargement ou un connecteur d'un câble de données et pouvant être fixé, avec le connecteur inséré, dans sa position dans le bloc de support de connecteur (2) au moyen d'un élément de serrage (4).

2. Module de connecteur selon la revendication 1, dans lequel le cadre (1) est configuré avec au moins un moyen d'accouplement (11) pour l'accoupler avec une région de bord inférieur du support de téléphone mobile.

3. Module de connecteur selon la revendication 2, dans lequel le moyen d'accouplement (11) est une bande profilée qui peut être insérée dans une rainure de guidage normalement utilisée pour recevoir des doigts de support au niveau de la région de bord inférieur du support de téléphone mobile.

4. Module de connecteur selon l'une quelconque des revendications 1 à 3, dans lequel l'élément de serrage (4) est une vis de serrage qui serre et fixe l'insert de support de connecteur (3), avec un connecteur (S) inséré dans celui, dans le bloc de support de connecteur (2).

5. Module de connecteur selon l'une quelconque des revendications 1 à 4, dans lequel le bloc de support de connecteur (2) est arrangé sur le cadre pour être ajustable dans le sens avant/arrière par une certaine distance d'ajustement.

6. Module de connecteur selon la revendication 5, dans lequel le bloc de support de connecteur (2) est déplaçable sur le cadre (1) dans le sens avant/arrière en pouvant être verrouillé pas-à-pas dans la rangée de la certaine distance d'ajustement au moyen d'un mécanisme de cliquet (12).

7. Module de connecteur selon l'une quelconque des revendications 1 à 4, dans lequel le bloc de support de connecteur (2) est arrangé sur le cadre (1) de manière fixée, et l'insert de support de connecteur (3) présente une profondeur dans le sens avant/arrière qui est suffisante pour que l'ouverture de réception (31) puisse être arrangée pour insérer un connecteur, dans une position correcte dans le sens avant/arrière et correspondant au connecteur respectif et le type de téléphone mobile associé.

8. Module de connecteur selon l'une quelconque des revendications 1 à 7, dans lequel plusieurs inserts de support de connecteur (3) sont prévus, chaque insert respectivement présentant des ouvertures de réception (31) différentes qui sont respectivement adaptées aux connecteurs différents disponibles sur le marché.
